# EUROPÄISCHE PATENTSCHRIFT

(11) **EP 0 966 390 B1**
(45) Veröffentlichungstag und Bekanntmachung des Hinweises auf die Patenterteilung: **04.06.2003**
(21) Anmeldenummer: 98905199.0
(22) Anmeldetag: 10.03.1998
(51) Int. Cl.: B65D 75/58, B29D 23/20

(54) **Beuteltube**
Bag tube
Tube à poche

(30) Priorität: 12.03.1997 CH 59197; 01.05.1997 CH 102197
(43) Veröffentlichungstag der Anmeldung: 29.12.1999
(73) Patentinhaber: H. Obrist & Co. AG, 4153 Reinach (CH)
(72) Erfinder: BÖSCH, Karl, CH-4202 Duggingen (CH)
(74) Vertreter: Hepp, Dieter
(86) Internationale Anmeldenummer: CH9800096
(87) Internationale Veröffentlichungsnummer: WO98040286

(56) Entgegenhaltungen:
- EP-A- 0 041 924
- WO-A-96/30278
- AU-A- 2 823 977
- CH-A- 228 564
- DE-A- 4 105 694
- FR-A- 2 181 620
- FR-A- 2 207 794
- GB-A- 805 631
- US-A- 2 947 653

## Beschreibung

Die Erfindung bezieht sich auf eine Beuteltube mit einem Folienmaterial, das eine Stirnwand und zwei Seitenwände der Tube bildet, wobei die Seitenwände längs zwei Seitenrandabschnitten miteinander verbunden sind, und mit einem Schulterstück, das einen verschliessbaren Auslassstutzen und einen an der Stirnwand befestigten, wie die Stirnwand gekrümmten Flansch aufweist.

Zum Verpacken von pastösen Produkten, wie Senf, Mayonnaise, Zahnpasta, sowie cremeartigen kosmetischen und medizinischen Erzeugnissen werden heute vor allem Aluminium-, Laminat- und Kunststofftuben verwendet.

Bekannte Aluminiumtuben sind im allgemeinen zylindrisch und besitzen an einem stirnseitigen Ende eine kegelförmige Stirnwand mit einem Auslass-Stutzen, der mit einem Schraubendeckel verschliessbar ist.

Es ist oft wünschbar, eine solche Beuteltube mit einer die Oeffnung des Schulterstücks verschliessenden Verschlusskappe nach unten gerichtet aufzustellen. Dabei besteht die Gefahr, dass die Tube umkippt, weil sich das Folienmaterial unter dem Gewicht des Inhalts der Tube verformt. Die Gefahr besteht insbesondere dann, wenn das Folienmäterial - in ebenfalls wünschbarer Weise:- dünn, leicht und flexibel ausgebildet ist.

Eine Aufgabe der Erfindung besteht darin, eine Beuteltube der eingangs angegebenen Art so auszubilden, dass die vorstehend geschilderte Gefahr eines Umkippens, wenn die Tube wie angegeben auf den Kopf'gestellt wird, verringert ist.

Die Aufgabe wird erfindungsgemäss dadurch gelöst, dass der Flansch sich vom Auslassstutzen ausgehend entlang der Stirnwand bis zu einem mittleren Bereich jeder Seitenwand nach aussen erstreckt und entlang der Stirnwand in Richtung zu den beiden Seitenrandabschnitten der Seitenwände hin erstreckt.

Vorzugsweise können zwei vom Flansch ausgehende, an den mittleren Bereichen der Seitenwände anliegende Laschen vorgesehen sein. Diese bieten zusätzlich auch einen Schutz des Folienmaterials gegen Verdrehung oder Verletzung, wenn die Tube zum Abschrauben oder Aufschrauben einer Verschlusskappe an den Seitenwänden im Bereich der Stirnwand gefasst wird. Um die Restentleerung der Tube sicherzustellen, sind diese Laschen vorteilhaft flexibel zu gestalten.

Das Verfahren zur Herstellung von Aluminiumtuben ist arbeits- und kostenaufwendig. So werden Aluminiumtuben im Fliesspressverfahren aus einer Aluminiumrondelle vorgefertigt, auf einer ersten Lackiermaschine an der Innenseite lackiert, mittels einer Druckmaschine aussen bedruckt und auf einer zweiten Lackiermaschine aussen überlackiert. Mittels einer weiteren Vorrichtung werden dann die Verschlussdeckel auf die vorgefertigten Tuben aufgeschraubt.

Bei der Herstellung solcher bekannter Tuben werden die dem verschlussdeckel abgewandten Enden der Tuben offen gelassen. Beim Füllen der Tuben wird das pastöse Produkt durch dieses offene Ende eingefüllt, worauf die Tube dann vollständig verschlossen wird.

Da die Tuben und die abzufüllenden pastösen Produkte üblicherweise in verschiedenen Fabrikationsbetrieben hergestellt werden, müssen die vorgefertigten leeren Tuben verpackt und vom Tubenhersteller zum Produkthersteller transportiert werden, wo sie dann mit dem entsprechenden Produkt aufgefüllt und verschlossen werden. Sowohl beim Tubenhersteller als auch beim Produkthersteller sind daher Lagerräume zür Zwischenlagerung der zur Abfüllung bereiten leeren Tuben nötig. Die Zwischenlagerung sowie auch der Transport vom Tubenhersteller zur Abfüllanlage des Produktherstellers benachteiligt die Wirtschaftlichkeit der Tubenherstellung beträchtlich; Dazu kommt, dass beim Lagern und Transportieren der leeren und stirnseitig offenen Tuben nicht verhindert werden kann, dass Verunreinigungen in die leeren Tuben gelangen, was dann in vielen Fällen das Vorschalten zusätzlicher Reinigungs- und Sterilisationsvorgänge im Produktionsbetrieb des Produktherstellers notwendig macht.

In ganz ähnlicher Art werden die bereits bekannten Kunststofftuben hergestellt. Hierbei werden Schlauchrohlinge hergestellt, welche in Nachfolgemaschinen bedruckt, lackiert und anschliessend mit einem Verschlusskörper versehen werden. Auch diese Tuben sind ebenfalls einseitig offenen und werden sowohl beim Tubenhersteller als auch beim Produkthersteller zwischengelagert.

Aus der europäischen Patentschrift 0'041'924 ist ein flexibler Behälter gemäss dem Oberbegriff des Anspruchs 1 bekannt, welcher in einem kontinuierlichen Verfahren hergestellt und abgefüllt, also in nur einem Werk verkaufsbereit fertigerstellt werden kann. Dieser bekannte tubenartige Behälter weist einen aus einer einstückigen Folie hergestellten Tubenkörper auf, der an seiner gefalteten Stirnseite mit einem Auslass versehen ist und zwei Wände besitzt, die einen im wesentlichen rechteckigen Umriss haben, miteinander an drei Seiten verschweisst sind und sich auf verschiedenen Seiten einer durch die Tubenlängsachse verlaufenden Symmetrie-Ebene befinden.

Bei einem Verfahren, das sowohl die Herstellung des Behälters als auch den Abfüllvorgang zum Gegenstand hat, ist insbesondere die Abfüllung der Behälter für die Gesamtproduktion taktbestimmend. So schnell wie das Produkt abgefüllt werden kann, so schnell müssen die Behälter hergestellt werden. So müssen insbesondere die Verfahrensschritte Schweissen, Zuschneiden, Auslass-Stutzen einschweissen und Verschlussdeckel aufsetzen in gleicher Taktzahl erfolgen, wie das Abfüllen der vorgefertigten Behälter. Schwierigkeiten in der Einhaltung der Verfahrensparameter bzw. Verzögerungen in der Taktfrequenz treten dann auf, wenn der Auslass-Stutzen aus verfahrenstechnischen Gründen nur von einer Seite her verschweisst werden kann, so wie das etwa bei dem aus der EPB 0 041 924 bekannten Verfahren der Fall ist. So wird in diesem Verfahren der Auslass-Stutzen von der Innenseite in eine Öffnung des vorgefertigten Tubenkörpers eingesetzt und von der Aussenseite her mit der Folie verschweisst. Dieser Schweissvorgang verzögert dabei die Abfüll-Leistung und hat zur Folge, dass die Herstell- und Abfüllkapazität reduziert wird.

Vorteilhafte Ausführungsformen und des Behälters sind Gegenstand der abhängigen Ansprüche.

Die neuartige, erfindungsgemässe Beuteltube zeichnet sich im wesentlichen dadurch aus, dass in nur einem Arbeitsprozess aus hochwertigem Folienmaterial ein Behälter geformt, mit einem pastösen Produkt aufgefüllt, verschlossen und anschliessend verpackt werden kann.

Die erfindungsgemässe Beuteltube hat grosse Vorteile. Sie ist kostengünstig, einfach in der Logistik und Produktbereitstellung sowie in jedem Abfüllbetrieb bedenkenlos einsetzbar. Die Herstellungskosten sind zudem verhältnismässig gering, da die Behälter in einfachen Schritten geformt und als solche nicht vorgefertigt und zwischengelagert werden müssen. Die Behälter können also direkt im Betrieb des Produktherstellers oder bei Lohnabfüllern hergestellt werden.

Die erfindungsgemässen Behälter bestehen aus einem flexiblen, einschichtigen Folienmaterial oder aber aus einem ebenfalls flexiblen, mehrschichtigen Verbundmaterial aus Kunststoff, Aluminium und/oder Papier. So kann es sich dabei zum Beispiel um ein dreischichtiges, folienartiges Verbundmaterial bestehend aus Polyester, Aluminium und Polypropylen oder Polyester, Aluminium und Polyethylen handeln, wobei dann der Polyester die Aussenschicht, das Aluminium die Mittelschicht und das Polypropylen bzw. das Polyethylen die Innenschicht des Behälters bildet.

Der Erfindungsgegenstand wird nun anhand von in der Zeichnung dargestellten Ausführungsbeispielen näher beschrieben. In der Zeichnung zeigen:
Figur 1 eine Draufsicht auf die Breitseite eines deformierbaren Behälters mit aufgesetztem Verschlusskörper,
Figur 2 eine Draufsicht auf das auslasseitige Ende des Behälters in Pfeilrichtung II der Figur 1,
Figur 3 eine Draufsicht auf einen Folienzuschnitt bestehend aus übereinanderliegenden Folienteilen,
Figur 4 eine vergrösserte Ansicht des Ausschnittes IV der Figur 3,
Figur 5 einen Schnitt durch den in der Figur 1 gezeichneten Verschlussdeckel in vergrössertem Massstab,
Figur 6 einen Schnitt durch den zur Aufnahme des Verschlussdeckels bestimmten Auslass-Stutzen,
Figur 7 eine Schnitt durch den aus Verschlussdeckel und Auslass-Stutzen gebildeten Verschlusskörper,
Figur 8 einen Schnitt entlang der Linie VIII der Figur 3 mit einem in Längsrichtung eingeführten und zur Aufnahme des Verschlusskörpers bestimmten Befestigungs-Stutzen,
Figur 9 den Stutzen der Figur 8 in eingesetztem Zustand,
Figur 10 einen Schnitt durch den aus Verschlusskörper und Befestigungs-Stutzen gebildeten Verschluss des in der Figur 1 dargestellten Behälters,
Fig. 11 eine Seitenansicht einer Beuteltube,
Fig. 12 einen Schnitt nach der Linie 12-12 in Fig. 11,
Fig. 13 in grösserem Massstab eine Draufsicht auf die Beuteltube von Fig. 11 und 12,
Fig. 14 ein Schulterstück der Beuteltube im Schnitt nach der Linie 14-14 in Fig. 13 und
Fig. 15 das Schulterstück im Schnitt nach der Linie 15-15 in Fig. 13.

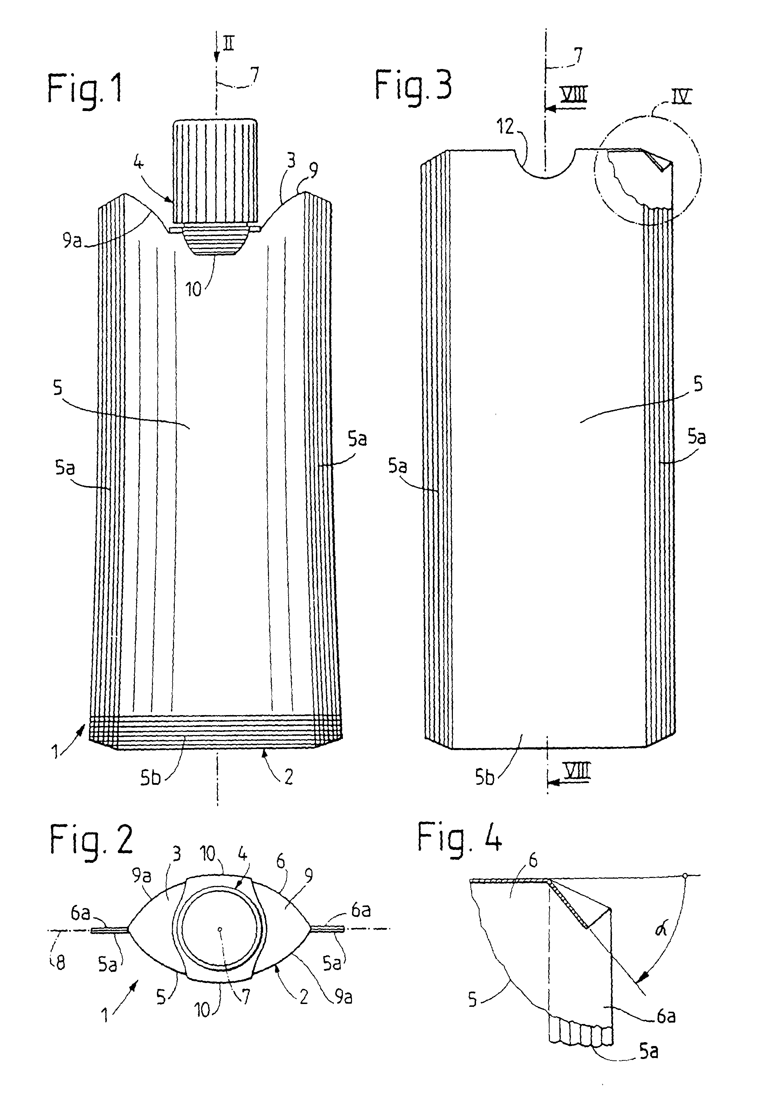

Der in den Figuren 1 und 2 dargestellte und als ganzes mit 1 bezeichnete, deformierbare Behälter weist einen Schlauchkörper 2 mit einer Stirnseite 3 auf, welche ihrerseits mit einer durch einen Verschlusskörper 4 verschliessbaren - nachfolgend noch näher beschriebenen - Auslassöffnung versehen ist.

Der Schlauchkörper 2 besitzt seinerseits zwei Wände 5 und 6, die einen im wesentlichen rechteckigen Umriss haben, sich auf verschiedenen Seiten einer durch die Längsachse 7 verlaufenden Ebene 8 befinden und bezüglich dieser Ebene 8 spiegelsymmetrisch zueinander sind. Die beiden Wände 5 und 6 weisen auf einander abgewandten Seiten je einen streifenförmigen Randabschnitt 5a bzw. 6a und an ihrem dem Auslass abgewandten Ende je einen ebenfalls streifenförmigen Querabschnitt auf (von welchen nur der Abschnitt 5b der Wand 5 sichtbar gezeichnet ist). Die Randabschnitte der beiden Wände 5 und 6 liegen paarweise aneinander an und sind miteinander verschweisst. Wie noch näher erläutert wird, bestehen die beiden Wände 5 und 6 zusammen mit einem sie verbindenden Mittelabschnitt 9 aus einem einstückigen, folienartigen Verbundmaterial bestehend aus drei miteinander verbundenen Schichten aus Polyester, Aluminium und Polypropylen.

Die die Auslassöffnung aufweisende Stirnseite 3 des Schlauchkörpers 2 wird im wesentlichen durch den erwähnten Mittelabschnitt 9 gebildet. Auf diesem ist ein nachfolgend noch näher bezeichneter Auslass-Stutzen aus Kunststoff angeordnet, der als Teil des Verschlusskörpers 4 unter anderem zum Schutz der Stirnkanten 9a mit die Wände 5 und 6 überdeckenden Schutzlaschen 10 und zur Verstärkung der Stirnseite 3 mit seitlichen Schulterstützen 11 versehen ist.

Der Mittelabschnitt 9 hat in dem in der Figur 2 dargestellten parallel zur Achse 7 projizierten Riss im wesentlichen die Form einer konvexen Linse, wobei die spitzwinkligen Ecken der im Stirnbereich 3 auslaufenden Seitenränder 5a und 6a flügelartig über die in der Figur 3 gezeichnete und im Mittelabschnitt 9 vorgesehene Auslassöffnung 12 des Behälters 1 vorstehen. In der in der Figur 1 dargestellten Ansicht ist also der Mittelabschnitt 9 eingebuchtet und hängt beidseits der Symmetrie-Ebene 8 über die Stirnkante 9a mit je einer der beiden Wände 5 bzw. 6 zusammen. In den Bereichen der Ränder 5a und 6a vereinigen sich die beiden Stirnkanten 9a zu einer einzigen in der Symmetrie-Ebene 8 liegenden Falt-Kante.

Zur Herstellung des in den Figuren 1 und 2 dargestellten Behälters wird in einem ersten Verfahrensschritt ein Folien- oder Verbundstoffwerkstück, dessen Breite doppelt so lang ist wie die Länge des Schlauchkörpers 2, über einen Keil gezogen und entlang der Werkstücklängsachse in zwei gleiche Hälften gefaltet, aus welchen dann die beiden Wände 5 und 6 des Schlauchkörpers 2 gebildet werden. Das Folien- oder Verbundstoffwerkstück kann hierbei zum Beispiel von einer Band-Rolle abgewickelt werden, wobei dann - wie nachfolgend noch erläutert wird - erst in einer bereits fortgeschrittenen Verfahrensphase vorgefertigte Schlauchkörper vom Bandmaterial bzw. vom Folienoder Verbundstoffwerkstück abgetrennt werden.

In einem zweiten Verfahrensschritt wird das gefaltete und vorzugsweise von einer Band-Rolle abgewikkelte Folien- oder Verbundstoffwerkstück in zur Herstellung einzelner Behälter bestimmte Folienabschnitte aufgeteilt. Hierzu wird das Werkstückband mittels einer Transportvorrichtung schrittweise um jeweils eine Breite des zu bildenden Schlauchkörpers 2 weitertransportiert, die durch den Falt gebildete Längskante des doppellagigen Werkstücks in konstanten Abständen quer zur Transportrichtung angeschnitten und zwischen jeweils zwei solcher Einschnitte je eine Auslassöffnung 12 ausgestanzt. Anschliessend werden die durch die Einschnitte gebildeten stirnseitigen Ecken der herzustellenden Behälter nach innen umgefalzt, die beiden aneinander anliegenden Hälften des durch das Anschneiden vorbereiteten Folienabschnittes quer zur Längsrichtung verschweisst und der so gebildete Schlauchkörper 2 mittels eines Schneidwerkzeugs vom übrigen Teil des Bandes getrennt, so dass ein Folienzuschnitt der in der Figur 3 dargestellten Form entsteht.

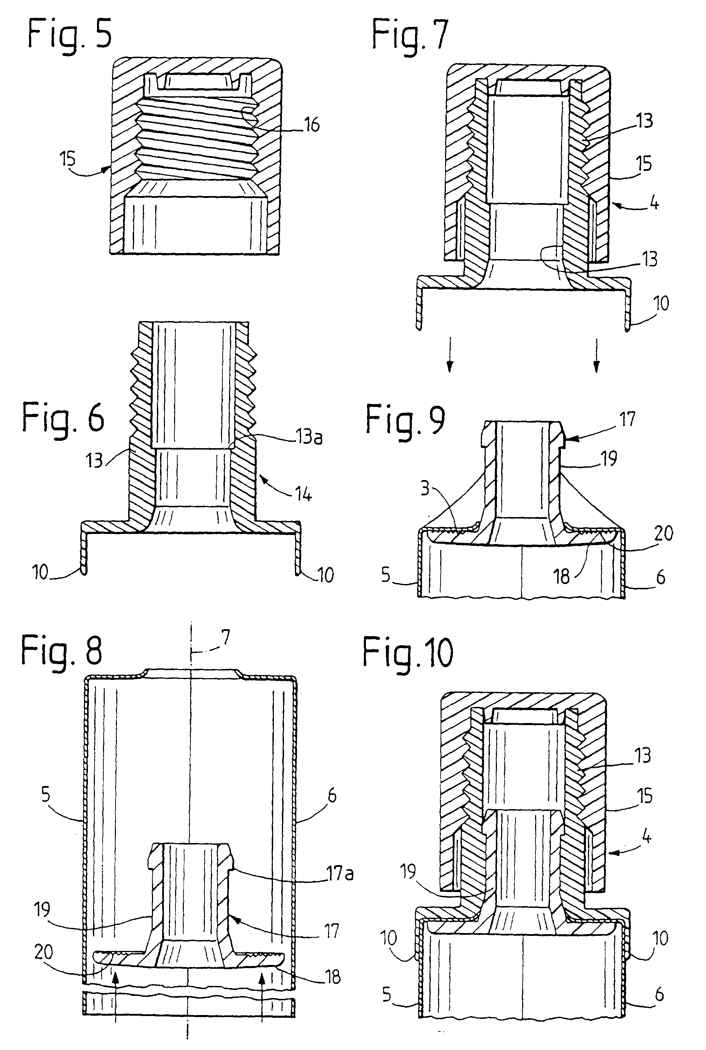

Das Falzen der beiden stirnseitigen Ecken um den 5° bis 90°, beispielsweise 45°, betragenden Winkel a (Fig. 4), hat nicht nur eine Verstärkung der Behälterberandung in diesem Bereich zur Folge. Durch die Bildung der Falze werden darüber hinaus scharfkantige Ecken vermieden, welche einen Benutzer bei unachtsamer Handhabung verletzen oder die zur Aufnahme der Behälter 1 dienenden Tragtaschen beschädigen können.

In einem weiteren Verfahrensschritt, der zum Beispiel parallel zum vorstehend beschriebenen zweiten Verfahrensschritt abläuft, wird der in der Figur 7 dargestellte Verschlusskörper 4 bereitgestellt. Dieser besteht im hier vorliegenden Fall aus dem bereits vorstehend genannten Auslass-Stutzen 14 (Fig. 6) und einem Verschlussdeckel 15 (Figur 5), wobei letzterer mit seinem Innengewinde 16 auf dem Gewindeteil 13 des Auslass-Stutzens 14 aufgeschraubt ist. Wie man insbesondere aus der Figur 6 ersehen kann, ist der Auslass-Stutzen 14 noch mit den bereits vorstehend genannten Schutzlaschen 10 und Schulterstützen 11 versehen und so dimensioniert und mit dem eine ebene Stirnfläche aufweisenden Verschlussdeckel 15 verschliessbar, dass der herzustellende Behälter eine genügend hohe Standfestigkeit besitzt und als Stehbehälter aufgestellt werden kann.

Im Anschluss an die vorstehenden Verfahrensschritte wird ein Befestigungs-Stutzen 17 in Pfeilrichtung durch den in der Figur 8 gezeichneten und bereits aufgefalteten Zuschnitt des Schlauchkörpers 2 geführt und am stirnseitigen Ende des Schlauchkörpers, also am Mittelabschnitt 9 angeschweisst, aufgeklebt und/oder aufgepresst, wozu der Befestigungs-Stutzen 17 insbesondere mit einem ringförmigen Kragen 18 versehen ist, der mit dem Mittelabschnitt 9 die gewünschte Verbindung eingeht. Wie man aus der Figur 9 ersehen kann, durchdringt der zur Aufnahme des Verschlusskörpers 4 bestimmte Hals 19 des Befestigungs-Stutzens 17 im befestigten Zustand die Auslassöffnung 12 des Schlauchkörper-Zuschnittes und ragt aus diesem heraus. Zur optimalen Verbindung von Befestigungs-Stutzen 17 und Mittelabschnitt 9 kann der Kragen 18 noch zusätzlich mit ringförmig angeordneten, spitzartig zulaufenden Rippen 20 versehen sein.

Nach dem Aufpressen des Verschlusskörpers 4 auf dem Befestigungs-Stutzen 17, durch welches insbesondere das den Mittelabschnitt 9 bildende Folienstück zwischen dem Befestigungs-Stutzen 17 und dem Auslass-Stutzen 14 eingespannt wird, wird das pastöse Produkt durch die der Stirnseite 3 gegenüberliegende, im Produktionsablauf vorzugsweise nach oben gekehrte Öffnung des genannten Zuschnittes in den Schlauchkörper 2 eingefüllt. Anschliessend wird die noch verbleibende Öffnung des Schlauchkörpers 2 verschlossen und verschweisst, und der so fertigerstellte und aufgefüllte Behälter direkt an ein zur Endverpackung bestimmtes Packband weitergeleitet.

Zur Entnahme des Produktes aus dem erfindungsgemässen Behälter 1 wird der Verschlussdeckel 15 entfernt und dann der Schlauchkörper 2, vom breitseitigen Ende her beginnend, zusammengedrückt. Das den Schlauchkörper 2 bildende Material ist vorzugsweise derart elastisch und insbesondere plastisch deformierbar, dass dieser nach dem Herausdrücken eines Teiles des Produktes seine zusammengedrückte Form durch den sogenannten "Rücksteli-Effekt" im wesentlichen beibehält und keine Luft durch den Auslass Stutzen 14 einsaugt.

Abschliessend sei noch darauf hingewiesen, dass die durch das vorstehend beschriebene Verfahren herstellbaren Behälter verschiedenartig ausgebildet sein und sich daher vom gezeichneten Ausführungsbeispiel unterscheiden können. So kann der Behälter anstelle einer rechteckigen auch eine andere Umrissform haben. Auch können die Abmessungen und Proportionen der Behälter in weiten Grenzen variieren. Schliesslich können auch noch die Verschlussdeckel verschiedenartig geformt und zum Beispiel die Form einer Kugel oder eines Polyeders haben.

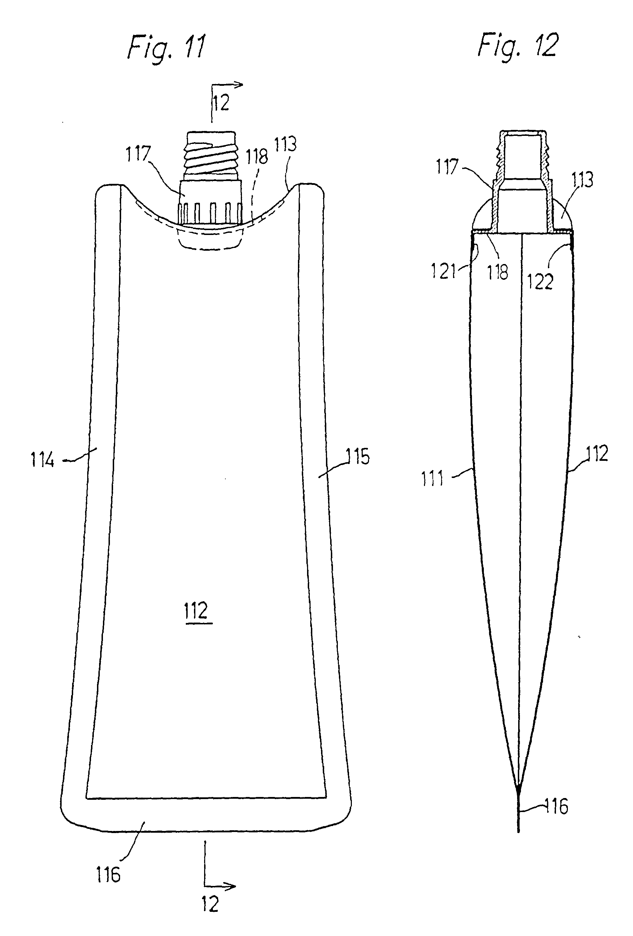

Die in den Fig. 11 bis 13 dargestellte Beuteltube besitzt zwei Seitenwände 111 und 112 und eine Stirnwand 113, die alle von einem Stück Folienmaterial gebildet sind. Das Folienmaterial ist vorzugsweise dünn, leicht und flexibel. Es kann eine einfache Kunststoffolie oder auch ein Laminat sein. Wenigstens die dem Inneren der Tube zugekehrte Seite des Folienmaterials kann aus schweissbarem Kunststoff bestehen. Die beiden Seitenwände 111 und 112 sind längs zwei Seitenrandabschnitten 114 und 115 und längs eines Endrandabschnittes 116 dicht miteinander verbunden, insbesondere verschweisst.

An der Stirnwand 113 ist ein Schulterstück befestigt, das eine verschliessbare Oeffnung in der Form eines Auslassstutzens 117 besitzt. Das Schulterstück besteht vorzugsweise aus einem schweissbaren Kunststoff. Von dem Auslassstutzen 117 geht ein Flansch 118 aus, der gleich wie die Stirnwand 113 gekrümmt ist. Der Flansch 118 liegt innen an der Stirnwand 113 an und ist daran dicht abschliessend befestigt, vorzugsweise festgeschweisst.

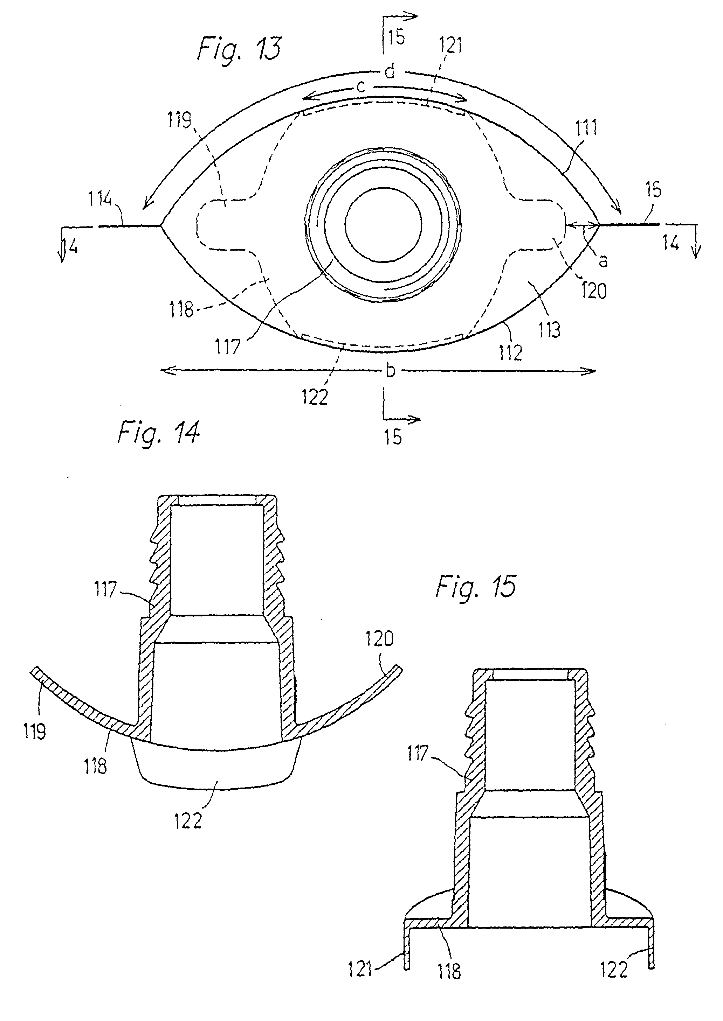

Der Flansch 118 erstreckt sich, vom Auslassstutzen 117 ausgehend, bis zu je einem mittleren Bereich jeder Seitenwand 111, 112 nach aussen. Dieser mittlere Bereich jeder Seitenwand hat, wie in Fig. 13 dargestellt, eine Breite c, die wenigstens gleich 20%, vorzugsweise wenigstens 30%, der ganzen Breite d jeder Seitenwand 111, 112 zwischen den Seitenrandabschnitten 114 und 115 ist. Der sich längs der Stirnwand 113 bis zu den oberen Enden der Seitenwände 111 und 112 nach aussen erstreckende Flansch 118 dient dazu, die Stirnwand 113 zu versteifen und dadurch die Gefahr zu verringern, dass die Tube umkippen könnte, wenn sie mit einer auf den Auslassstutzen 117 aufgeschraubten Verschlusskappe (nicht dargestellt) nach unten gerichtet aufgestellt wird.

Zu dem gleichen Zweck weist der Flansch 118 zwei an der Stirnwand 113 befestigte Stützen 119 und 120 auf, die sich in Richtung zu den beiden Seitenrandabschnitten 114 und 115 der Seitenwände 111, 112 hin erstrecken. Die beiden Stützen 119 und 120 erstrecken sich vorzugsweise bis auf einen Abstand a (Fig. 13) zu den Seitenrandabschnitten 114 bzw. 115 hin, der höchstens gleich 20%, vorzugsweise höchstens 10%, des bei der Stirnwand 113 gemessenen Abstandes b zwischen den Seitenrandabschnitten ist.

Der Flansch 118 kann aber auch bei den Rändern der Stirnwand 113 zwei abgewinkelte, parallel zu den Seitenwänden 111 und 112 verlaufende Laschen 121 und 122 aufweisen. Die Laschen 121 und 122 versteifen die der Stirnwand 113 benachbarten mittleren Bereiche der Seitenwände 111 und 112. Gleichzeitig schützen sie das Folienmaterial gegen Verdrehung und/oder Verletzung, wenn die Tube für das Abschrauben einer Verschlusskappe (nicht dargestellt) vom Auslassstutzen 117 mit einer Hand in den genannten Bereichen der Seitenwände gehalten wird. Anderseits sind die Laschen 121 und 122, um das vollständige Ausdrücken der Tube nicht zu behindern, vorzugsweise flexibler als die übrigen Teile des Flansches 118. Beispielsweise haben die Laschen 121, 122 eine kleinere Wandstärke als die übrigen Teile des Flansches 118.

## Patentansprüche

1. Beuteltube, mit einem Folienmaterial, das eine Stirnwand (3; 113) und zwei Seitenwände (5,6; 111, 112) der Tube bildet, wobei die Seitenwände längs zwei Seitenrandabschnitten (5a, 6a; 114, 115) miteinander verbunden sind, und mit einem Schulterstück, das einen verschliessbaren Auslassstutzen (14; 117) und einen an der Stirnwand (3; 113) befestigten, wie die Stirnwand gekrümmten Flansch (118) aufweist, **dadurch gekennzeichnet, dass** der Flansch (118) sich vom Auslassstutzen (14; 117) ausgehend entlang der Stirnwand (3; 113) bis zu einem mittleren Bereich jeder Seitenwand (5, 6; 111, 112) nach aussen erstreckt und entlang der Stirnwand (3; 113) in Richtung zu den beiden Seitenrändabschnitten (5a, 6a; 114, 115) der Seitenwände (5, 6; 111, 112) hin erstreckt.

2. Beuteltube nach Anspruch 1, **dadurch gekennzeichnet, dass** der genannte mittlere Bereich jeder Seitenwand (111, 112) eine Breite (c) hat, die wenigstens gleich 20% der ganzen Breite (d) der Seitenwand zwischen den Seitenrandabschnitten (114, 115) ist.

3. Beuteltube nach einem der Ansprüche 1 oder 2, **dadurch gekennzeichnet, dass** der Flansch (118) wenigstens zwei abstehende, am Folienmaterial anliegende Laschen (10; 121, 122) zur Verstärkung des Folienmaterials aufweist.

4. Beuteltube nach Anspruch 3, **dadurch gekennzeichnet, dass** die Laschen (10; 121, 122) an den mittleren Bereichen der Seitenwände (111, 112) anliegen.

5. Beuteltube nach Anspruch 4, **dadurch gekennzeichnet, dass** die an den Seitenwänden (111, 112) anliegenden Laschen (121, 122) flexibler sind als die übrigen Teile des Flansches (118).

6. Beuteltube nach Anspruch 1, **dadurch gekennzeichnet, dass** sich der Flansch (118) bis auf einen Abstand (a) zu den Seitenrandabschnitten (114, 115) erstreckt, der höchstens gleich 20%, vorzugsweise höchstens 10%, des bei der Stirnwand (113) gemessenen Abstandes (b) zwischen den Seitenrandabschnitten (114, 115) ist.

7. Beuteltube nach einem der Ansprüche 1 bis 6, **dadurch gekennzeichnet, dass** der Flansch die Stirnwand (3) überdeckt.

8. Beuteltube nach Anspruch 7, **dadurch gekennzeichnet, dass** die Laschen (10) die Seitenwände (5, 6) überdecken.

9. Beuteltube nach einem der Ansprüche 1 bis 6, **dadurch gekennzeichnet, dass** der Flansch (118) an der Innenseite der Stirnwand (113) anliegt.

10. Beuteltube gemäss einem der Ansprüche 1 bis 6, **gekennzeichnet durch** zwei zusammendrückbare Seitenwände (5, 6) und einer eine Auslassöffnung (12) aufweisende Stirnwand (3), wobei die beiden Seitenwände (5, 6) an zwei einander gegenüberliegenden Seitenrandabschnitte (5a, 6a) und einem der Stirnwand (3) gegenüberliegenden Querrand (5b) dicht miteinander verbunden sind und aus einem einstückigen Werkstück bestehen und wobei auf der ebenfalls **durch** das genannte Werkstück gebildeten Stirnwand (3) ein Verschlusskörper (4) angeordnet ist, der einen Auslassstutzen (14) aufweist und der mit diesem Auslassstutzen (14) auf einem das Werkstück stirnseitig durchdringenden Befestigungsstutzen (17) sitzt.

11. Beuteltube nach Anspruch 10, **dadurch gekennzeichnet, dass** die Ecken des stirnseitigen Teiles des Schlauchkörpers (2) gefaltet sind und dass jede Ecke um 5° bis 90° umgelegt ist

12. Beuteltube nach einem der Ansprüche 10 oder 11, **dadurch gekennzeichnet, dass** der Verschlusskörper (4) zum Schutz der Stirnkanten (9a) mit die Seitenwände (5, 6) überdeckenden Schutzlaschen (10) versehen ist.

## Claims

1. Bag tube with a foil material that forms a frontal wall (3; 113) and two side walls (5, 6; 111, 112) of the tube, wherein the side walls are connected to one another along two lateral edge sections (5a, 6a; 114, 115), and with a shoulder piece that has an outlet nozzle (14; 117) that can be sealed and a flange (118) which is fixed to the frontal wall (3; 113) and which is curved like the frontal wall, **characterised in that**
the flange (118) extends outwards along the frontal wall (3; 113), starting from the outlet nozzle (14; 117), up to a middle area of each side wall (5, 6; 111, 112), and along the frontal wall (3; 113) in the direction towards the two lateral edge sections (5a, 6a; 114, 115) of the side walls (5, 6; 111, 112).

2. Bag tube in accordance with claim 1, **characterised in that** the aforementioned middle area of each side wall (111, 112) is of a width (c) that is at least equal to 20% of the whole width (d) of the side wall between the lateral edge sections (114, 115).

3. Bag tube in accordance with one of the claims 1 or 2, **characterised in that** the flange (118) has at least two projecting tabs (10; 121, 122), which rest against the foil material, to reinforce the foil material.

4. Bag tube in accordance with claim 3, **characterised in that** the tabs (10; 121, 122) rest against the middle areas of the side walls (111, 112).

5. Bag tube in accordance with claim 4, **characterised in that** the tabs (121, 122) that rest against the side walls (111, 112) are more flexible than the other parts of the flange (118).

6. Bag tube in accordance with claim 1, **characterised in that** the flange (118) extends as far as [a point that is] a distance (a) from the lateral edge sections (114, 115) that is at most equal to 20% - preferably at most 10% - of the distance (b) between the lateral edge sections (114, 115), measured at the frontal wall (113).

7. Bag tube in accordance with one of the claims 1 to 6, **characterised in that** the flange covers over the frontal wall (3).

8. Bag tube in accordance with claim 7, **characterised in that** the tabs (10) cover over the side walls (5, 6).

9. Bag tube in accordance with one of the claims 1 to 6, **characterised in that** the flange (118) rests against the inner side of the frontal wall (113).

10. Bag tube in accordance with one of the claims 1 to 6, **characterised by** two side walls (5, 6) that can be squeezed together, and a frontal wall (3) that has an outlet opening (12), wherein the two side walls (5, 6) are tightly joined to one another at two lateral edge sections (5a, 6a) that lie opposite one another and at a transverse edge (5b) lying opposite the frontal wall (3), and comprise a one-piece work piece; and wherein on the frontal wall (3), which is likewise formed by the aforementioned work piece, is a sealing element (4) which has an outlet nozzle (14) and which - with this outlet nozzle (14) - sits on the fastening nozzle (17) that penetrates the work piece on the frontal face.

11. Bag tube in accordance with claim 10, **characterised in that** the comers of the frontal face part of the tube body (2) are folded and that each comer is turned over by 5° to 90°.

12. Bag tube in accordance with one of the claims 10 or 11, **characterised in that** to protect the frontal edges (9a), the sealing element (4) is equipped with protective tabs (10) that cover over the side walls (5, 6).

## Revendications

1. Tube-sachet comprenant un matériau en feuille qui forme une paroi frontale (3 ; 113) et deux parois latérales (5, 6 ; 111, 112) du tube, les parois latérales étant reliées entre elles le long de deux sections de bord latérales (5a, 6a ; 114, 115), et une pièce à épaulement qui comporte une tubulure de sortie (14 ; 117) apte à être obturée et une collerette (118) fixée à la paroi frontale (3 ; 113) et courbée comme celle-ci, **caractérisé en ce que** la collerette (118), à partir de la tubulure de sortie (14 ; 117), longe la paroi frontale (3 ; 113) jusqu'à une zone centrale de chaque paroi latérale (5, 6 ; 111, 112), vers l'extérieur, et longe la paroi frontale vers les deux sections de bord latérales (5a. 6a ; 114, 115) des parois latérales (5, 6 ; 111, 112).

2. Tube-sachet selon la revendication 1, **caractérisé en ce que** ladite zone centrale de chaque paroi latérale (111, 112) a une largeur (c) qui représente au moins 20 % de la largeur totale (d) de la paroi latérale entre les sections de bord latérales (114, 115).

3. Tube-sachet selon la revendication 1 ou 2, **caractérisé en ce que** la collerette (118) présente au moins deux pattes saillantes (10 ; 121, 122) qui sont appliquées contre le matériau en feuille afin de renforcer celui-ci.

4. Tube-sachet selon la revendication 3, **caractérisé en ce que** les pattes (10 ; 121, 122) sont appliquées contre les zones centrales des parois latérales (111, 112).

5. Tube-sachet selon la revendication 4, **caractérisé en ce que** les pattes (121, 122) appliquées contre les parois latérales (111, 112) sont plus flexibles que les autres parties de la collerette (118).

6. Tube-sachet selon la revendication 1, **caractérisé en ce que** la collerette (118) s'étend jusqu'à une distance (a) des sections de bord latérales (114, 115) qui représente au maximum 20 %, de préférence au maximum 10 %, de la distance (b), mesurée sur la paroi latérale (113), entre les sections de bord latérales (114, 115).

7. Tube-sachet selon l'une des revendications 1 à 6, **caractérisé en ce que** la collerette couvre la paroi frontale (3) .

8. Tube-sachet selon la revendication 7, **caractérisé en ce que** les pattes (10) couvrent les parois latérales (5, 6).

9. Tube-sachet selon l'une des revendications 1 à 6, **caractérisé en ce que** la collerette (118) est appliquée contre le côté intérieur de la paroi frontale (113).

10. Tube-sachet selon l'une des revendications 1 à 6, **caractérisé par** deux parois latérales compressibles (5, 6) et une paroi frontale (3) présentant une ouverture de sortie (12), étant précisé que les deux parois latérales (5, 6) sont reliées entre elles de manière étanche au niveau de deux sections de bord latérales opposées (5a, 6a) et d'un bord transversal (5b) opposé à la paroi latérale (3) et se composent d'une seule pièce, et qu'il est prévu sur la paroi frontale (3), formée elle aussi par ladite pièce, un corps d'obturation (4) qui comporte une tubulure de sortie (14) et qui est placé avec ladite tubulure de sortie (14) sur une tubulure de fixation (17) traversant la pièce, côté frontal.

11. Tube-sachet selon la revendication 10, **caractérisé en ce que** les coins de la partie frontale du corps tubulaire (2) sont pliés et **en ce que** chaque coin est rabattu de 5° à 90°.

12. Tube-sachet selon la revendication 10 ou 11, **caractérisé en ce que** le corps d'obturation (4) est pourvu, pour protéger les bords frontaux (9a), de pattes de protection (10) qui couvrent les parois latérales (5, 6).
